(19)

Europäisches
Patentamt
European
Patent Office
Office européen
des brevets

(11) **EP 4 458 772 A1**

(12) **EUROPEAN PATENT APPLICATION**
published in accordance with Art. 153(4) EPC

(43) Date of publication:
**06.11.2024 Bulletin 2024/45**

(51) International Patent Classification (IPC):
*C01G 25/02* (2006.01)     *A61C 13/083* (2006.01)
*C04B 35/486* (2006.01)

(21) Application number: **22916015.5**

(22) Date of filing: **26.12.2022**

(52) Cooperative Patent Classification (CPC):
**A61C 13/083; C01G 25/02; C04B 35/486**

(86) International application number:
**PCT/JP2022/047900**

(87) International publication number:
**WO 2023/127792 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 JP 2021213268**

(71) Applicant: **Kuraray Noritake Dental Inc.
Kurashiki-shi, Okayama 710-0801 (JP)**

(72) Inventors:
• **MATSUURA, Atsushi
  Miyoshi-shi
  Aichi 470-0293 (JP)**
• **KATO, Shinichiro
  Miyoshi-shi
  Aichi 470-0293 (JP)**
• **NAKANO, Kirihiro
  Miyoshi-shi
  Aichi 470-0293 (JP)**

(74) Representative: **D Young & Co LLP
3 Noble Street
London EC2V 7BQ (GB)**

(54) **ZIRCONIA SINTERED BODY AND METHOD FOR PRODUCING SAME**

(57)     The present invention provides a zirconia sintered body and a method of production thereof that exhibit excellent flexural strength, fracture toughness, and translucency according to the yttria content. The present invention relates to a zirconia sintered body comprising zirconia particles, and satisfying A15/A50 < 0.60 (wherein A15 represents the particle diameter of when the cumulative area of zirconia particles reaches 15% of the total area, and A50 represents the particle diameter of when the cumulative area of zirconia particles reaches 50% of the total area in a SEM photograph of the zirconia sintered body when the area of each zirconia particle is calculated and the calculated areas are accumulated in sequence from particles with smaller areas, where the total area represents the sum of the areas of the zirconia particles in the SEM photograph).

2.0 μm

FIG.1

EP 4 458 772 A1

## Description

### TECHNICAL FIELD

The present invention relates to a zirconia sintered body, and a method for producing same.

### BACKGROUND ART

Ceramic sintering is generally described as a mass transfer phenomenon in which the free energy of the system decreases. In solid-phase sintering of a ceramic powder, the primary particles contained in the powder undergo grain growth as the surface area and interface decrease with firing time in a manner that depends on the particle diameter and the firing temperature. It is known that grain growth is more likely to take place when particles contained in a powder have smaller diameters, and when the particle size difference before and after the mass transfer is greater.

It is generally understood that ceramic sintered bodies with smaller particle diameters are more likely to show increased grain boundary areas, and exhibit higher strength and higher toughness. It is also commonly acknowledged that ceramic sintered bodies tend to show less scattering of light by the particles, and exhibit enhanced translucency with a greater presence of particles sufficiently larger than the wavelengths of visible light in terms of a particle size. That is, the presence of both small particles and sufficiently large particles is desired for sintered bodies, in order to satisfy both strength and translucency in ceramics.

For example, because of the high strength and high toughness of zirconia as a ceramic material, a zirconia sintered body (hereinafter, also referred to as "partially-stabilized zirconia sintered body") is used in which a small amount of yttria (yttrium oxide; $Y_2O_3$), or a stabilizer, is dissolved to form a solid solution.

Aside from mechanical characteristics such as high strength and high toughness, optical properties such as translucency and shade are also required in view of aesthetics when such partially-stabilized zirconia sintered bodies are used as dental materials. Previous studies of partially-stabilized zirconia sintered bodies have investigated zirconia sintered bodies having high strength and high toughness, as well as translucency, with the purpose of mimicking natural teeth.

Patent Literatures 1 and 2 represent examples. Patent Literature 1 discloses a zirconia sintered body with three classes of zirconia particle diameters categorized based on the converted diameter of each zirconia particle calculated from the computed cross-sectional area of each zirconia particle in a cross-sectional picture of the zirconia sintered body by assuming that each zirconia particle is circular. The three classes of zirconia particle diameters are less than 0.4 $\mu$m, 0.4 $\mu$m or more and less than 0.76 $\mu$m, and 0.76 $\mu$m or more. The cross-sectional area percentages are 4% or more and 35% or less for zirconia particles with a converted particle diameter of less than 0.4 $\mu$m, 24% or more and 57% or less for zirconia particles with a converted particle diameter of 0.4 $\mu$m or more and less than 0.76 $\mu$m, and 16% or more and 62% or less for zirconia particles with a converted particle diameter of 0.76 $\mu$m or more. The zirconia sintered body is disclosed as having high flexural strength and fracture toughness, and adequate transparency.

Patent Literature 2 proposes a translucent yttria-containing zirconia sintered body obtained by a hot isostatic pressing (HIP) process, and a method of production thereof, with the objective to provide both high strength and high translucency.

### CITATION LIST

Patent Literature

Patent Literature 1: WO2014/142080
Patent Literature 2: JP 2008-222450 A

### SUMMARY OF INVENTION

Technical Problem

Over the last years, there has been a growing demand in the dental sector for dental prostheses with improved aesthetics to meet the various needs for dental treatments from patients.

To fulfill such needs, it is necessary to satisfy strength, fracture toughness, and translucency, all at high levels. For incisors (central incisors, lateral incisors, canines), there is an increasing demand for dental prostheses (particularly, prostheses for central incisors) made from zirconia to exhibit a high translucency comparable to that seen in the incisal edge portions of natural teeth because these portions of natural teeth are notably translucent.

However, while increasing the yttria content in zirconia sintered bodies improves translucency, the strength tends to greatly decrease as the yttria content increases. For example, Patent Literature 1 satisfies high flexural strength, high fracture toughness, and high translucency when the yttria content is 4 mol% relative to the total mole of zirconia and yttria as indicated in Examples, allowing for applications to dental prostheses for incisors with a yttria content of 4 mol%. However, certain patients may express a preference for dental prostheses with even higher translucency, particularly for central incisors. This has created a need for further improvement in terms of providing dental prostheses that align with the intended tooth type and varying needs for dental treatments from patients, particularly when the yttria content exceeds 4 mol%. Moreover, as disclosed in Patent Literature 1, zirconia sintered bodies exhibit a trade-off relationship between flexural strength and fracture toughness, and there also exists a trade-off between translucency and flexural strength, where increasing the yttria content enhances translucency but markedly decreases strength. This makes it even more challenging to provide a zirconia sintered body satisfying high flexural strength, high fracture toughness, and high translucency with increased yttria content.

The HIP device used for hot isostatic pressing (HIP) in Patent Literature 2 is a specialized type of equipment categorized as high-pressure gas production device, and it is difficult to say that production of zirconia sintered bodies is easily achievable.

An object of the present invention is to provide a zirconia sintered body and a method of production thereof that exhibit excellent flexural strength, fracture toughness, and translucency according to the yttria content.

Solution to Problem

The present inventors conducted intensive studies to find a solution to the foregoing issues. Through an investigation of the particle size and firing conditions of the raw materials, and a careful examination of the particle size and its distribution state in sintered bodies, it was found that the foregoing issues can be overcome by setting the particles in a zirconia sintered body to A15/A50 < 0.60 (A15 represents the particle diameter of when the cumulative area of zirconia particles reaches 15% of the total area, and A50 represents the particle diameter of when the cumulative area of zirconia particles reaches 50% of the total area in a SEM photograph of the zirconia sintered body when the area of each zirconia particle is calculated and the calculated areas are accumulated in sequence from particles with smaller areas). This led to the completion of the present invention after further examinations.

Specifically, the present invention includes the following.

[1] A zirconia sintered body comprising zirconia particles, and satisfying A15/A50 < 0.60, wherein A15 represents the particle diameter of when the cumulative area of zirconia particles reaches 15% of the total area, and A50 represents the particle diameter of when the cumulative area of zirconia particles reaches 50% of the total area in a SEM photograph of the zirconia sintered body when the area of each zirconia particle is calculated and the calculated areas are accumulated in sequence from particles with smaller areas, where the total area represents the sum of the areas of the zirconia particles in the SEM photograph.

[2] The zirconia sintered body according to [1], which satisfies 0.20 < A15/A50 < 0.60.

[3] The zirconia sintered body according to [1] or [2], which further comprises a stabilizer capable of preventing a phase transformation of zirconia.

[4] The zirconia sintered body according to [3], wherein the stabilizer is yttria.

[5] The zirconia sintered body according to [4], wherein the content of the yttria is 3.0 to 7.5 mol% relative to the total mole of the zirconia and the yttria.

[6] A method for producing a zirconia sintered body of any one of [1] to [5], comprising the steps of:

molding a raw material powder containing a zirconia raw material to obtain a zirconia molded body; and
firing the zirconia molded body or a zirconia pre-sintered body resulting from pre-sintering of the zirconia molded body to obtain a zirconia sintered body,
the zirconia raw material being a zirconia raw material with at least two average particle diameters.

[7] The method for producing a zirconia sintered body according to [6], wherein the zirconia raw material is a zirconia raw material with two average particle diameters.

[8] The method for producing a zirconia sintered body according to [6] or [7], wherein P1 and P2 satisfy the following formulae:

$$50 \text{ nm} \le P1 < 500 \text{ nm}$$

$$5 \text{ nm} < P2 < 50 \text{ nm},$$

where P1 and P2 represent the two average particle diameters.

[9] A method for producing a zirconia sintered body of any one of [1] to [5], comprising the steps of:

molding a raw material powder containing a zirconia raw material to obtain a zirconia molded body; and
firing the zirconia molded body or a zirconia pre-sintered body resulting from pre-sintering of the zirconia molded body to obtain a zirconia sintered body,
the zirconia raw material being a zirconia raw material with a single average particle diameter.

[10] The method for producing a zirconia sintered body according to [9], wherein the zirconia raw material is a zirconia powder having an average particle diameter of 50 nm or more and 500 nm or less.

[11] The method for producing a zirconia sintered body according to [10], wherein the average particle diameter is 60 nm or more and 400 nm or less.

[12] The method for producing a zirconia sintered body according to any one of [6] to [11], wherein the raw material powder comprises a raw material of a stabilizer capable of preventing a phase transformation of zirconia.

[13] The method for producing a zirconia sintered body according to [12], wherein the stabilizer is yttria.

[14] The method for producing a zirconia sintered body according to [12] or [13], wherein at least a part of the stabilizer is not dissolved in zirconia as a solid solution.

[15] The method for producing a zirconia sintered body according to [14], wherein the fraction $f_y$ of the stabilizer not dissolved in zirconia as a solid solution in the raw material powder is 1% or more as calculated from the following formula,

$$f_y = I_{29}/(I_{28}+I_{29}+I_{30}) \times 100,$$

where $f_y$ represents the fraction (%) of yttria not dissolved in zirconia as a solid solution, $I_{28}$ represents the area intensity of a peak near $2\theta = 28°$, where the main peak of the monoclinic crystal system appears in XRD measurement, $I_{29}$ represents the area intensity of a peak near $2\theta = 29°$, where the main peak of yttria appears in XRD measurement, and $I_{30}$ represents the area intensity of a peak near $2\theta = 30°$, where the main peak of the tetragonal or cubic crystal system appears in XRD measurement.

[16] The method for producing a zirconia sintered body according to any one of [6] to [15], wherein the fraction $f_m$ of the monoclinic crystal system in the zirconia raw material is 55% or more as calculated from the following formula,

$$f_m = I_{28}/(I_{28}+I_{30}) \times 100,$$

where $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

[17] The method for producing a zirconia sintered body according to any one of [6] to [16], wherein the duration from the start of temperature increase to the completion of the retention at a highest firing temperature is 90 minutes or less in said firing.

Advantageous Effects of Invention

According to the present invention, a zirconia sintered body and a method of production thereof can be provided that exhibit excellent flexural strength, fracture toughness, and translucency according to the yttria content. When prioritizing strength, the yttria content can be about 3 to 4 mol%, whereas the yttria content can be about 5 to 6 mol% when prioritizing translucency. Even in these cases, the invention enables the provision of a zirconia sintered body and a method of production thereof that exhibit an excellent balance of flexural strength, fracture toughness, and translucency. A zirconia sintered body of the present invention exhibits outstanding flexural strength, fracture toughness, and translucency even with a yttria content exceeding 5 mol% relative to the total mole of zirconia and yttria, making it widely applicable without restrictions on the types of teeth, including molars, canines, and incisors.

A zirconia sintered body of the present invention exhibits outstanding flexural strength, fracture toughness, and translucency even after brief firing. Excellent flexural strength, fracture toughness, and translucency are achieved in a zirconia sintered body of the present invention without requiring a specialized equipment such as a hot isostatic pressing (HIP) device, even after brief firing.

BRIEF DESCRIPTION OF DRAWINGS

[FIG. 1] FIG. 1 depicts a SEM image of a zirconia sintered body according to Example 1 of the present invention at 5,000× magnification, along with the indicated grain boundaries.
[FIG. 2] FIG. 2 depicts a SEM image of a zirconia sintered body according to Example 4 of the present invention at 5,000× magnification, along with the indicated grain boundaries.
[FIG. 3] FIG. 3 depicts a SEM image of a zirconia sintered body according to Comparative Example 2 of the present invention at 5,000× magnification, along with the indicated grain boundaries.

DESCRIPTION OF EMBODIMENTS

<Zirconia Sintered Body>

A zirconia sintered body of the present invention comprises zirconia particles, and satisfies A15/A50 < 0.60.

A15 represents the particle diameter of when the cumulative area of zirconia particles reaches 15% of the total area, and A50 represents the particle diameter of when the cumulative area of zirconia particles reaches 50% of the total area in a SEM photograph of the zirconia sintered body when the area of each zirconia particle is calculated and the calculated areas are accumulated in sequence from particles with smaller areas. The total area represents the sum of the areas of the zirconia particles in the SEM photograph.

The term "zirconia sintered body" refers to a state in which it has been fully sintered.

In the present specification, the upper limits and lower limits of numeric ranges (for example, ranges of contents or ratios of components, ranges of values calculated from components, and ranges of physical properties) can be appropriately combined.

It is known that the strength and toughness of ceramic sintered bodies generally increase with a reduction in the diameter of particles contained in the sintered body, whereas the translucency of sintered bodies tends to increase when the sintered body contains a greater number of particles with larger particle diameters. A balance between the area of smaller particles and the area of larger particles is important to meet all these conditions. The present inventors have examined how the particle area influences the properties of a zirconia sintered body, and found that extremely small particles and particles sufficiently larger than the wavelengths of visible light positively impact the properties of the sintered body. This finding led to the provision of a zirconia sintered body and a method of production thereof that exhibit excellent flexural strength, fracture toughness, and translucency according to the yttria content, regardless of whether it is high or low, probably as a result of satisfying the relationship A15/A50 < 0.60 by maintaining a balance between the area of smaller particles and the area of larger particles in the zirconia sintered body.

In a zirconia sintered body of the present invention, A15/A50 represents the ratio between the particle diameter of when the cumulative area of zirconia particles reaches 15% of the total area and the particle diameter of when the cumulative area of zirconia particles reaches 50% of the total area in a SEM photograph of the zirconia sintered body when the area of each zirconia particle is calculated and the calculated areas are accumulated in sequence from particles with smaller areas.

The SEM photograph of zirconia sintered body used for the evaluation of A15/A50 may be an image captured by using a commercially available scanning electron microscope (for example, VE-9800 manufactured by Keyence under this trade name). The SEM image may be any portion of the zirconia sintered body, whether it be the surface or the cross section.

The ratio A15/A50 is calculated with the use of image analysis software after indicating grain boundaries on individual crystal grains over the image data of the SEM photograph of the zirconia sintered body. The image analysis software may be a commercially available product (for example, Image-Pro Plus manufactured by Hakuto Co., Ltd. under this trade name). More specifically, the ratio A15/A50 can be calculated by binarizing the captured image (SEM image), and recognizing the particles from the field (region) by adjusting the brightness range to provide clear grain boundaries.

In view of an even superior balance between flexural strength, fracture toughness, and translucency, a zirconia sintered body of the present invention preferably satisfies 0.20 < A15/A50 < 0.60.

It is more preferable that the zirconia sintered body satisfy 0.25 < A15/A50, even more preferably 0.28 < A15/A50, particularly preferably 0.30 < A15/A50. It is also more preferable that the zirconia sintered body satisfy A15/A50 < 0.59, even more preferably A15/A50 ≤ 0.58, particularly preferably A15/A50 ≤ 0.57.

Preferably, a zirconia sintered body of the present invention further comprises a stabilizer capable of preventing a phase transformation of zirconia (hereinafter, also referred to simply as "stabilizer"). The stabilizer is preferably one capable of forming partially-stabilized zirconia. Examples of the stabilizer include oxides such as calcium oxide (CaO), magnesium oxide (MgO), yttria, cerium oxide ($CeO_2$), scandium oxide ($Sc_2O_3$), niobium oxide ($Nb_2O_5$), lanthanum oxide ($La_2O_3$), erbium oxide ($Er_2O_3$), praseodymium oxide (PreOn, $Pr_2O_3$), samarium oxide ($Sm_2O_3$), europium oxide ($Eu_2O_3$), and thulium oxide ($Tm_2O_3$). In view of providing a zirconia sintered body having excellent translucency, preferred is yttria.

In view of providing a zirconia sintered body having excellent translucency, the content of the stabilizer (preferably, yttria) in a zirconia sintered body of the present invention is preferably 3.0 mol% or more, more preferably 3.5 mol% or more, even more preferably 4.0 mol% or more relative to the total mole of zirconia (zirconium(IV) oxide; $ZrO_2$) and stabilizer. When the stabilizer content is 3.0 mol% or more, the sintered body becomes more abundant in cubic crystal system in its crystal form, allowing for enhanced translucency in the zirconia sintered body. The stabilizer content is preferably 7.5 mol% or less, more preferably 7.0 mol% or less, even more preferably 6.5 mol% or less. A stabilizer content of 7.5 mol% or less enables a reduction in strength decrease in the zirconia sintered body. The stabilizer content may be any combination of these ranges. For example, the content of the stabilizer (preferably, yttria) is preferably 3.0 to 7.5 mol%, more preferably 3.5 to 7.0 mol%, even more preferably 4.0 to 6.5 mol%.

A certain preferred embodiment is, for example, a zirconia sintered body in which the content of the stabilizer (preferably, yttria) is more than 4.0 mol% and 6.5 mol% or less.

The stabilizer content in a zirconia sintered body of the present invention can be quantified using common analysis techniques, for example, such as inductively coupled plasma (ICP) emission spectral analysis, X-ray fluorescence analysis (XRF), and energy-dispersive or wavelength-dispersive X-ray analysis (SEM-EDX or SEM-WDX) coupled with a scanning electron microscope.

In view of excellent translucency, a zirconia sintered body of the present invention has an average crystal grain size of preferably 700 nm or less, more preferably 500 nm or less, even more preferably 400 nm or less. The average crystal grain size in the zirconia sintered body can be measured by capturing surface images with a scanning electron microscope (VE-9800 manufactured by Keyence under this trade name), indicating grain boundaries on individual crystal grains in the captured image, and calculating the average crystal grain size using image analysis software (Image-Pro Plus manufactured by Hakuto Co., Ltd. under this trade name). The crystal grain size from Image-Pro Plus is the average of the measurements of the length of a line segment connecting the contour line and passing through the center of gravity determined from the contour line of the crystal grain, conducted at 2-degree intervals with the center of gravity as the central point. In the present invention, the average crystal grain size is the arithmetic average of the crystal grain sizes of all particles not extending beyond the edges of the SEM photographic image (3 fields).

The density of the zirconia sintered body is preferably 5.80 $g/cm^3$ or more, more preferably 5.82 $g/cm^3$ or more, even more preferably 5.87 $g/cm^3$ or more because higher densities lead to fewer internal voids and reduced light scattering. Particularly preferably, the zirconia sintered body has essentially no voids.

The density of the sintered body can be calculated as the ratio of the mass of the sintered body to the volume of the sintered body.

In a zirconia sintered body of the present invention, the fraction of monoclinic crystal system with respect to the tetragonal and cubic crystal systems after 5 hours of immersion in 180°C hot water is preferably 5% or less, more preferably 3% or less, even more preferably 1% or less. With the fraction of monoclinic crystal system confined within these ranges, it is possible to reduce volume changes over time and prevent fractures when the zirconia sintered body is used as, for example, a dental prosthesis. The fraction of monoclinic crystal system can be determined by polishing the surface of the zirconia sintered body to mirror finish, and immersing this sintered body in 180°C hot water for 5 hours, followed by X-ray diffraction (XRD) measurement of the polished area using the following formula.

$$f_m = I_{28}/(I_{28}+I_{30}) \times 100,$$

where $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

A zirconia sintered body of the present invention can be suitably used for dental product applications. Examples of such dental products include copings, frameworks, crowns, crown bridges, abutments, implants, implant screws, implant fixtures, implant bridges, implant burs, brackets, denture bases, inlays, onlays, orthodontic wires, and laminate veneers.

<Production Method of Zirconia Sintered Body>

Examples of a zirconia sintered body production method of the present invention include:

(i) a method comprising the steps of molding a raw material powder containing a zirconia raw material to obtain a zirconia molded body; optionally pre-sintering the zirconia molded body to obtain a zirconia pre-sintered body; and firing the zirconia molded body or zirconia pre-sintered body to obtain a zirconia sintered body, where the zirconia raw material is a zirconia raw material with at least two average particle diameters (hereinafter, also referred to as "first embodiment "); and

(ii) a method comprising the steps of molding a raw material powder containing a zirconia raw material to obtain a zirconia molded body; optionally pre-sintering the zirconia molded body to obtain a zirconia pre-sintered body; and firing the zirconia molded body or zirconia pre-sintered body to obtain a zirconia sintered body, where the zirconia raw material is a zirconia raw material with a single average particle diameter (hereinafter, also referred to as "second embodiment ").

In the production method of the first embodiment, the zirconia raw material is a zirconia raw material with at least two average particle diameters, and the zirconia raw material may be a zirconia raw material with three or more average particle diameters. It is, however, preferable that the zirconia raw material be a zirconia raw material (powder) with two average particle diameters. Preferably, P1 and P2 satisfy the following formulae.

$$50 \text{ nm} \leq P1 < 500 \text{ nm}$$

$$5 \text{ nm} < P2 < 50 \text{ nm},$$

where P1 and P2 represent the two average particle diameters.

In view of enhancing the effectiveness of the present invention (balancing the flexural strength, fracture toughness, and translucency of the ceramic sintered body), the average particle diameter P1 (larger particles) is preferably 50 nm or more, more preferably 60 nm or more, even more preferably 70 nm or more, particularly preferably 80 nm or more. In view of enhancing the effectiveness of the present invention, the average particle diameter P1 is preferably less than 500 nm, more preferably 400 nm or less, even more preferably 350 nm or less, particularly preferably 300 nm or less.

In view of enhancing the effectiveness of the present invention (balancing the flexural strength, fracture toughness, and translucency of the ceramic sintered body), the average particle diameter P2 (smaller particles) is preferably 5 nm or more, more preferably 6 nm or more, even more preferably 7 nm or more, particularly preferably 8 nm or more. In view of enhancing the effectiveness of the present invention, the average particle diameter P2 is preferably less than 50 nm, more preferably 48 nm or less, even more preferably 45 nm or less, particularly preferably 40 nm or less.

The average particle diameter of zirconia raw material can be measured by volume with ultrasonic waves being applied after a slurry diluted with water is subjected to 30 minutes of ultrasonication, using, for example, a laser diffraction/scattering particle size distribution analyzer (manufactured by Horiba Ltd. under the trade name Partica LA-950). For example, the average particle diameter can be measured using the method described in the EXAMPLES section below.

The ratio (mass ratio) of P1 (larger particles) and P2 (smaller particles) is not particularly limited, and is preferably 1:9 to 9:1. In view of enhancing the balance between flexural strength, fracture toughness, and translucency in the ceramic sintered body obtained, the ratio is more preferably 2:8 to 8:2, even more preferably 3:7 to 7:3.

Preferably, the raw material powder comprises a raw material of a stabilizer (preferably, yttria) capable of preventing a phase transformation of zirconia.

In the raw material powder, it is preferable that at least a part of the stabilizer (preferably, yttria) is not dissolved in zirconia as a solid solution because it can facilitate the production of the desired zirconia sintered body. In other words, it is preferable that at least a part of the zirconia crystals remain as monoclinic.

Whether a part of stabilizer (preferably, yttria) is not dissolved in zirconia as a solid solution can be determined from an X-ray diffraction (XRD) pattern, for example. The presence of peaks derived from the stabilizer in an XRD pattern of the raw material powder means the presence of a stabilizer that is not dissolved in zirconia as a solid solution in the raw material powder. A peak derived from the stabilizer is basically not observable in an XRD pattern when the stabilizer is fully dissolved as a solid solution. It is, however, possible, depending on the crystal state or other conditions of the stabilizer, that the stabilizer is not dissolved in zirconia as a solid solution even when the XRD pattern does not show peaks for stabilizers. When the predominant crystal system of zirconia is tetragonal and/or cubic and there is no peak attributed to the stabilizer in the XRD pattern, the stabilizer can be thought of having dissolved in zirconia as a solid solution for the most part, basically completely. In a raw material powder of the present invention, it is not required that the stabilizer is fully dissolved in zirconia as a solid solution. In this specification, "stabilizer being dissolved as a solid solution" means that, for example, the elements (atoms) contained in the stabilizer are dissolved in zirconia as a solid solution.

The following describes situations where at least a part of the stabilizer is not dissolved in zirconia as a solid solution, with yttria serving as an example of the stabilizer.

The fraction $f_y$ of yttria not dissolved in zirconia as a solid solution (hereinafter, also referred to as "undissolved yttria") is preferably greater than 0%. In view of considerations such as easy production of the desired zirconia sintered body with an outstanding balance between flexural strength, fracture toughness, and translucency, the fraction $f_y$ is more preferably 1% or more, even more preferably 2% or more, particularly preferably 3% or more. The upper limit of the fraction $f_y$ of undissolved yttria is dependent on the yttria content in the zirconia molded body.

The fraction $f_y$ may be 25% or less when the yttria content is 7.5 mol% or less relative to the total mole of zirconia and yttria.

For example, when the yttria content is 3.0 mol% or more and less than 4.5 mol%, the fraction $f_y$ may be 15% or less, 14% or less, or 13% or less.

When the yttria content is 4.5 mol% or more and less than 5.8 mol%, the fraction $f_y$ may be 20% or less, 18% or less, or 17% or less.

When the yttria content is 5.8 mol% or more and 7.5 mol% or less, the fraction $f_y$ may be 23% or less, 21% or less, or 20% or less.

When the yttria content is 3.0 mol% or more and less than 4.5 mol%, the fraction $f_y$ is preferably 2% or more, more preferably 3% or more, even more preferably 4% or more, particularly preferably 5% or more.

When the yttria content is 4.5 mol% or more and less than 5.8 mol%, the fraction $f_y$ is preferably 3% or more, more preferably 4% or more, even more preferably 5% or more, yet more preferably 6% or more, particularly preferably 7% or more.

When the yttria content is 5.8 mol% or more and 7.5 mol% or less, the fraction $f_y$ is preferably 4% or more, more preferably 5% or more, even more preferably 6% or more, yet more preferably 7% or more, particularly preferably 8% or more.

In the raw material powder, the percentage presence $f_y$ of undissolved yttria can be calculated using the following formula.

$$f_y = I_{29}/(I_{28}+I_{29}+I_{30}) \times 100,$$

where $f_y$ represents the fraction (%) of undissolved yttria, $I_{28}$ represents the area intensity of a peak near $2\theta = 28°$, where the main peak of the monoclinic crystal system appears in XRD measurement, $I_{29}$ represents the area intensity of a peak near $2\theta = 29°$, where the main peak of yttria appears in XRD measurement, and $I_{30}$ represents the area intensity of a peak near $2\theta = 30°$, where the main peak of the tetragonal or cubic crystal system appears in XRD measurement.

When additionally using stabilizers other than yttria, the formula can be applied to calculate the percentage presence of undissolved stabilizers other than yttria by substituting $I_{29}$ with the peaks of other stabilizers.

In the raw material powder, the fraction $f_m$ of monoclinic crystal system is preferably 55% or more, as calculated by the formula below. The fraction $f_m$ of monoclinic crystal system means the fraction of the monoclinic crystal system with respect to the total amount of the monoclinic crystal system, tetragonal crystal system, and cubic crystal system.

$$f_m = I_{28}/(I_{28}+I_{30}) \times 100,$$

where $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

In view of considerations such as easier production of the desired zirconia sintered body, the fraction $f_m$ of monoclinic crystal system is more preferably 60% or more, even more preferably 70% or more, yet more preferably 80% or more, particularly preferably 90% or more, most preferably 95% or more.

The method of production of the raw material powder is not particularly limited, and may be selected from methods, for example, such as the breakdown process, which involves pulverizing coarse particles into a fine powder, and the building-up process, which involves synthesis from atoms or ions through nucleation and growth.

The zirconia particles (powder) contained in the raw material powder may be zirconia particles (powder) in which zirconia is predominantly monoclinic in crystal system. In the present invention, "being predominantly monoclinic in crystal system" means that the fraction $f_m$ of the monoclinic crystal system in zirconia is 50% or more with respect to the total amount of all the crystal systems (monoclinic crystal system, tetragonal crystal system, and cubic crystal system) in zirconia, as calculated by the formula above. Commercially available products may be used as zirconia particles in which zirconia is predominantly monoclinic in crystal system.

The zirconia raw material (powder) is not particularly limited, and can be produced to achieve the desired average particle diameter using a method that includes wet pulverization of a zirconia powder with a known pulverizing mixer (e.g., a ball mill) (pulverization step), and spray drying of the pulverized material with a spray dryer or the like.

Optionally, the resultant powder may be classified to obtain zirconia particles (powder) differing in average particle diameter from the material resulting from the pulverization. In this way, a zirconia raw material can be obtained that has average particle diameters P1 and P2 satisfying the foregoing formulae. Known methods and devices can be used for the classification process. Examples include porous membranes (e.g., membrane filters with a pore size of 50 nm), and classifiers (wet classifiers, dry classifiers).

The yttria raw material (powder) is not particularly limited, and can be produced to achieve the desired average particle diameter using a method that includes wet pulverization of a yttria powder with a known pulverizing mixer (e.g., a ball mill) (pulverization step), and spray drying of the pulverized material with a spray dryer or the like.

The raw material powder can be obtained by mixing zirconia raw materials of different average particle diameters, optionally with a yttria raw material. The yttria raw material can be added in a predetermined proportion that provides the desired yttria content in the zirconia sintered body. The raw material powder may have a form of, for example a powder, a granule or granulated material, a paste, or a slurry.

Additives such as binders, plasticizers, dispersants, emulsifiers, antifoaming agents, pH adjusters, lubricants, and resins may be added in the pulverization step, or after the pulverization step and before spray drying. The additives may be used alone, or two or more thereof may be used in combination.

Examples of the binders include polyvinyl alcohol, methyl cellulose, carboxymethyl cellulose, acrylic binders, wax binders, polyvinyl butyral, polymethyl methacrylate, and ethyl cellulose.

Examples of the plasticizers include polyethylene glycol, glycerin, propylene glycol, and dibutyl phthalic acid.

Examples of the dispersants include ammonium polycarboxylates (e.g., triammonium citrate), ammonium polyacrylate, acrylic copolymer resins, acrylic acid ester copolymers, polyacrylic acid, bentonite, carboxymethyl cellulose, anionic surfactants (for example, polyoxyethylene alkyl ether phosphates such as polyoxyethylene lauryl ether phosphate), non-ionic surfactants, oleic glyceride, amine salt surfactants, and oligosaccharide alcohols.

Examples of the emulsifiers include alkyl ethers, phenyl ethers, sorbitan derivatives, and ammonium salts.

Examples of the antifoaming agents include alcohols, polyethers, polyethylene glycol, silicone, and waxes.

Examples of the pH adjusters include ammonia, ammonium salts (including ammonium hydroxides such as tetramethylammonium hydroxide), alkali metal salts, and alkali-earth metal salts.

Examples of the lubricants include polyoxyethylene alkylate ethers, and waxes.

The resin is not particularly limited, and is preferably one that can serve as a binder. Specific examples of the resin include paraffin wax, polyvinyl alcohol, polyethylene, polypropylene, an ethylene-vinyl acetate copolymer, polystyrene, atactic polypropylene, methacrylic resin, and fatty acids such as stearic acid.

The step of molding a raw material powder containing a zirconia raw material to obtain a zirconia molded body is not particularly limited, and a zirconia molded body may be produced from a raw material powder containing a zirconia raw material (powder) with at least two average particle diameters, using a known method (for example, press forming).

The zirconia molded body is created by applying external force to a powder containing zirconia-based particles. Because it has not undergone the firing process, the term "zirconia molded body" means a material where necking has not taken place between particles.

When the zirconia molded body is produced using a method that comprises the step of press forming a powder containing zirconia particles, the press forming method is not particularly limited to specific methods, and a known press forming machine can be used. Specific examples of the pressing forming method include uniaxial pressing. The applied pressure is typically 10 MPa to 1,000 MPa, and it is appropriately set to the optimum value according to the size, open porosity, water absorbency, and biaxial flexural strength desired for the molded body, and the particle diameter of the raw material powder. By increasing the molding pressure in the production method, it is possible to enhance the filling of voids in the resulting molded body and set a low open porosity. To achieve a higher density in the zirconia molded body produced, the zirconia molded body may be subjected to a cold isostatic pressing (CIP) process after uniaxial pressing.

The raw material powder used for press forming may additionally comprise the aforementioned additives. These components may be incorporated during the preparation of the raw material powder.

The production method of the first embodiment comprises the step of firing the zirconia molded body or a zirconia pre-sintered body resulting from pre-sintering of the zirconia molded body to obtain a zirconia sintered body.

The step of pre-sintering the zirconia molded body to obtain a zirconia pre-sintered body (pre-sintering step) is described below.

The zirconia pre-sintered body can be a precursor (intermediate product) of a zirconia sintered body. In this specification, "zirconia pre-sintered body" refers to a state where zirconia particles have formed necks but have not been fully sintered.

The shape of zirconia pre-sintered body is not particularly limited, and may be a block or disc shape, for example. The zirconia pre-sintered body includes those that have undergone a molding process. The zirconia pre-sintered body includes, for example, precursors of dental products (for example, crown-shaped prostheses) before sintering, created from pre-sintered zirconia discs processed with a CAD/CAM (Computer-Aided Design/Computer-Aided Manufacturing) system.

In order to ensure block formation, the firing temperature (pre-sintering temperature) in the pre-sintering step is, for example, preferably 800°C or more, more preferably 900°C or more, even more preferably 950°C or more. The firing temperature is, for example, preferably 1,200°C or less, more preferably 1,150°C or less, even more preferably 1,100°C or less. For example, a range of 800°C to 1,200°C is preferred in a zirconia pre-sintered body production method of the present invention. With such a firing temperature, there probably will be no advancement in the formation of a solid solution of the stabilizer in the pre-sintering step.

A zirconia pre-sintered body of the present invention refers to a zirconia pre-sintered body that comprises zirconia as a main component, and that has undergone block formation while the zirconia particles (powder) were not fully sintered. The zirconia content in a zirconia pre-sintered body according to the present invention is preferably 60 mass% or more, more preferably 70 mass% or more, even more preferably 80 mass% or more.

The zirconia pre-sintered body has a density of preferably 2.7 g/cm$^3$ or more. The zirconia pre-sintered body has a density of preferably 4.0 g/cm$^3$ or less, more preferably 3.8 g/cm$^3$ or less, even more preferably 3.6 g/cm$^3$ or less. An easy molding process is possible when the density falls within these ranges. For example, the density of pre-sintered body can be calculated as the ratio of the mass of the pre-sintered body to the volume of the pre-sintered body.

The zirconia pre-sintered body has a three-point flexural strength of preferably 15 to 70 MPa, more preferably 18 to 60 MPa, even more preferably 20 to 50 MPa. The flexural strength can be measured following ISO 6872:2015 except for the specimen size, using a specimen measuring 5 mm in thickness, 10 mm in width, and 50 mm in length. For surface finishing, the specimen surfaces, including chamfered surfaces (45° chamfers at the corners of specimen), are finished longitudinally with #600 sandpaper. The specimen is disposed in such an orientation that its widest face is perpendicular to the vertical direction (loading direction). In the flexure test, measurements are made at a span of 30 mm with a crosshead speed of 0.5 mm/min.

The production method of the first embodiment may comprise, for example, the step of milling the zirconia molded body or zirconia pre-sintered body. The zirconia molded body or zirconia pre-sintered body can be sintered after milling to produce a dental product. Preferably, a CAD/CAM system is used for the milling process. Preferably, the zirconia molded body or zirconia pre-sintered body has a shape of, for example, a dental prosthesis after milling.

The production method of the first embodiment comprises the step of firing the zirconia molded body or a zirconia pre-sintered body resulting from pre-sintering of the zirconia molded body to obtain a zirconia sintered body.

The firing temperature (highest firing temperature) for obtaining the zirconia sintered body is, for example, preferably 1,400°C or more, more preferably 1,450°C or more. The firing temperature is, for example, preferably 1,650°C or less, more preferably 1,600°C or less. Preferably, a zirconia sintered body production method of the present invention fires the zirconia pre-sintered body at a highest firing temperature of 1,400°C to 1,650°C.

The holding time (retention time) at the highest firing temperature is typically 180 minutes or less, preferably 120 minutes or less, more preferably 90 minutes or less, even more preferably 75 minutes or less, yet more preferably 60 minutes or less, particularly preferably 45 minutes or less, most preferably 30 minutes or less. The holding time may be 25 minutes or less, 20 minutes or less, or 15 minutes or less. The holding time is preferably 1 minute or more, more preferably 5 minutes or more, even more preferably 10 minutes or more. A production method of the present invention enables the fabrication of a zirconia sintered body that exhibits excellent flexural strength, fracture toughness, and translucency even with a short firing time, according to the yttria content. With a reduced firing time, it is also possible to enhance production efficiency and reduce the energy cost.

The rate of temperature increase to the highest firing temperature is preferably 5°C/min or more, more preferably 8°C/min or more, even more preferably 10°C/min or more. The rate of temperature increase to the highest firing temperature is preferably 500°C/min or less, more preferably 400°C/min or less, even more preferably 300°C/min or less. In the case of brief firing, the rate of temperature increase to the highest firing temperature is preferably 150°C/min or more, more preferably 200°C/min or more, even more preferably 250°C/min or more. In the case of brief firing, the rate of temperature increase to the highest firing temperature is preferably 500°C/min or less, more preferably 400°C/min or less, even more preferably 300°C/min or less.

The rate of temperature decrease from the highest firing temperature to 300°C is preferably -5°C/min or more, more preferably -8°C/min or more, even more preferably -10°C/min or more. The rate of temperature decrease from the highest firing temperature to 300°C is preferably -400°C/min or less, more preferably -300°C/min or less, even more preferably -200°C/min or less. Preferably, the rate of temperature decrease is set to a rate that does not cause defects, such as cracks, in the sintered body. For example, the sintered body may be allowed to cool at room temperature after the heating is finished.

In the production method of the first embodiment, the duration from the start of temperature increase to the completion of the retention at the highest firing temperature is preferably 90 minutes or less, more preferably 75 minutes or less, even more preferably 60 minutes or less in the case of brief sintering. With a more focus on the ease of fabrication at the dental clinic, the duration is yet more preferably 45 minutes or less, particularly preferably 30 minutes or less. The duration may be 25 minutes or less, 20 minutes or less, or 15 minutes or less.

The production method of the second embodiment may be the same method as that of the first embodiment, except for using a single type of zirconia raw material, and the duration of holding time (retention time) at the highest firing temperature.

In the production method of the second embodiment, the zirconia raw material is preferably a zirconia powder having an average particle diameter of 50 nm or more and 500 nm or less. When the average particle diameter of the zirconia powder is P3, it is preferable in view of enhanced effectiveness of the present invention that P3 be 50 nm or more, more preferably 60 nm or more, even more preferably 70 nm or more, particularly preferably 80 nm or more. In view of enhanced effectiveness of the present invention, the average particle diameter P3 is preferably 500 nm or less, more preferably 400 nm or less, even more preferably 350 nm or less, particularly preferably 300 nm or less.

In the production method of the second embodiment, the holding time (retention time) at the highest firing temperature is preferably 90 minutes or less, more preferably 75 minutes or less, even more preferably 60 minutes or less, particularly preferably 45 minutes or less, most preferably 30 minutes or less. The holding time may be 25 minutes or less, 20 minutes or less, or 15 minutes or less. The holding time is preferably 1 minute or more, more preferably 5 minutes or more, even more preferably 10 minutes or more. A production method of the present invention enables the fabrication of a zirconia sintered body that exhibits excellent flexural strength, fracture toughness, and translucency even with such a short firing time, according to the yttria content. With a reduced firing time, it is also possible to enhance production efficiency and reduce the energy cost.

The present invention encompasses embodiments combining the foregoing features in various ways within the technical idea of the present invention, provided that the present invention can exhibit its effects.

EXAMPLES

The present invention is described below in greater detail using Examples. It is to be noted, however, that the present invention is not limited by the following, and various changes may be made by a person with ordinary skill in the art within the technical idea of the present invention.

The following raw materials 1 to 3 were used as zirconia raw material and yttria raw material.

Raw material 1 (zirconia raw material) was prepared as a dry powder by spray drying zirconium oxide after wet pulverization in water. The monoclinic crystal system was 99% or more, and the average primary particle diameter was 100 nm.

Raw material 2 (zirconia raw material) was obtained through wet pulverization and classification of zirconia. Raw material 2 was prepared as a dry powder after spray drying following addition of 2 mass% of polyacrylic acid during wet pulverization of zirconium oxide in water. The monoclinic crystal system was 99% or more, and the average primary particle diameter was 40 nm.

Raw material 3 (yttria raw material) was prepared as a dry powder by spray drying yttria after wet pulverization in water. The average primary particle diameter was 200 nm, and the BET specific surface area was 6.5 $m^2$/g.

The average primary particle diameters of raw materials 1 to 3 were measured by volume with ultrasonic waves being applied after a slurry diluted with water was subjected to 30 minutes of ultrasonication, using a laser diffraction/scattering particle size distribution analyzer (manufactured by Horiba Ltd. under the trade name Partica LA-950).

[Examples 1 to 11 and Comparative Examples 1 and 2]

The zirconia raw materials (raw materials 1 and 2) and yttria raw material (raw material 3), separately prepared, were introduced into water. These were placed in a rotary container with zirconia beads, and the raw materials were mixed and pulverized by ball milling. The desired slurry was obtained after about 20 hours of ball milling. Subsequently, the slurry was stirred with rotary vanes after adding an organic binder. The resultant slurry was dried to granulate with a spray dryer to obtain a powder. The powder had an average particle diameter of 40 $\mu$m. The powder was poured into a columnar die, and uniaxially pressed under 200 MPa pressure to obtain a molded body. The molded body was placed in an electric furnace, and the temperature was increased from room temperature at 10°C/min. After being retained at 500°C for 2 hours to debind the organic component, the molded body was held at 1,000°C for 2 hours, and allowed to cool at -0.4°C/min to obtain a pre-sintered body. The pre-sintered body was fired under the firing conditions 1 to 4 presented in Table 1 below, yielding zirconia sintered bodies of Examples.

<Measurement Method of Undissolved Yttria Fraction in Pre-Sintered Body>

The zirconia pre-sintered body of each Example and Comparative Example was analyzed for XRD patterns using CuKα radiation, and the fraction $f_y$ was calculated using the following formula.

$$f_y = I_{29}/(I_{28}+I_{29}+I_{30}) \times 100,$$

where $f_y$ represents the fraction (%) of undissolved yttria, $I_{28}$ represents the area intensity of a peak near $2\theta = 28°$, where the main peak of the monoclinic crystal system appears in XRD measurement, $I_{29}$ represents the area intensity of a peak near $2\theta = 29°$, where the main peak of yttria appears in XRD measurement, and $I_{30}$ represents the area intensity of a peak near $2\theta = 30°$, where the main peak of the tetragonal or cubic crystal system appears in XRD measurement.

[Table 1]

| Firing conditions | Rate of temperature increase and rate of temperature decrease (°C/min) | Retention temperature (°C) | Retention time (min) |
|---|---|---|---|
| 1 | 300 | 1550 | 10 |
|  | -150 | 300 | 0 |
| 2 | 250 | 1550 | 20 |
|  | -150 | 300 | 0 |
| 3 | 35 | 1550 | 30 |
|  | -45 | 300 | 0 |
| 4 | 10 | 1550 | 120 |
|  | -10 | 300 | 0 |
| (In each firing condition, the temperature was increased from room temperature (25°C). The retention temperature (1,550°C in firing condition 1) represents the highest firing temperature. The rate of temperature decrease represents the rate of temperature decrease from the highest firing temperature during temperature decrease. The retention temperature for temperature decrease represents the temperature reached after temperature decrease.) | | | |

[Reference Example]

A zirconia sintered body was obtained using the same method described in Example 1 of Patent Literature 1, except that the firing condition 4 was employed as Reference Example.

<Measurement Method of Average Crystal Grain Size in Sintered Body>

For the sintered body obtained in each Example and Comparative Example, surface images were captured with a scanning electron microscope (VE-9800 manufactured by Keyence under this trade name). After indicating grain boundaries on individual crystal grains in the captured image, the average crystal grain size was calculated by image analysis. The average crystal grain size was measured using image analysis software (Image-Pro Plus manufactured by Hakuto Co., Ltd. under this trade name). The captured SEM image was subjected to binarization, and the brightness range was adjusted to enhance clarity of the grain boundaries, allowing for the recognition of particles in the field (region). The crystal grain size from Image-Pro Plus is the average of the measurements of the length of a line segment connecting the contour line and passing through the center of gravity determined from the contour line of the crystal grain, conducted at 2-degree intervals with the center of gravity as the central point. In the SEM photographic images (3 fields) of Examples and Comparative Examples, the arithmetic average of the crystal grain sizes of all particles not extending beyond the edges of the image was determined as the average crystal grain size (number-based) of the sintered body. Note that particles not extending beyond the edges of the image are particles excluding those with contour lines extending beyond the screen of the SEM photographic image (particles with their contour lines interrupted by the boundary lines at the top, bottom, left, and right). To select the crystal grain size of all particles not extending beyond the edges of the image, the option in Image-Pro Plus was used that excludes all particles lying on the boundary lines.

The average crystal grain size was 297 nm in the zirconia sintered body of Example 1, and 263 nm in the zirconia sintered body of Example 5.

<Evaluation Method of Particle Diameter Ratio (A15/A50) of Sintered Body>

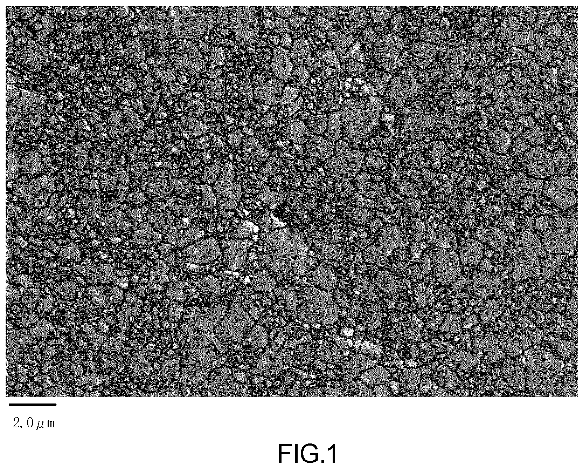

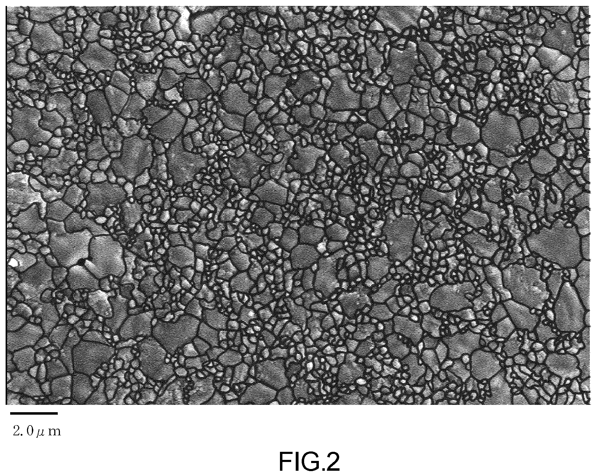

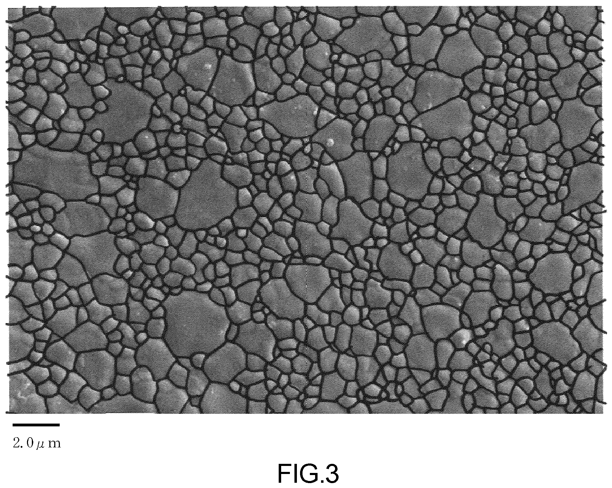

For each sintered body obtained in Examples, Comparative Examples, and Reference Example, surface images were captured with a scanning electron microscope (VE-9800 manufactured by Keyence under this trade name). After indicating grain boundaries on individual crystal grains in the captured image, the area of each zirconia particle was calculated using image analysis software (Image-Pro Plus manufactured by Hakuto Co., Ltd. under this trade name). The ratio A15/A50 was calculated after sequentially accumulating these particles in terms of area from particles with smaller areas, where A15 is the particle diameter of when the cumulative area reached 15% of the total area, and A50 is the particle diameter of when the cumulative area reached 50% of the total area (n = 3). FIGS. 1 to 3 show the images used by the image analysis software. In the SEM photographic images (3 fields) of Examples and Comparative Examples, the cumulative area was calculated for all particles not extending beyond the edges of the image. Note that particles not extending beyond the edges of the image are particles excluding those with contour lines extending beyond the screen of the SEM photographic image (particles with their contour lines interrupted by the boundary lines at the top, bottom, left, and right). To select the crystal grain size of all particles not extending beyond the edges of the image, the option in Image-Pro Plus was used that excludes all particles lying on the boundary lines.

<Measurement Method of Biaxial Flexural Strength of Sintered Body>

A sintered body, measuring 15 mm in diameter and 1.2 mm in thickness, was obtained according to the production method of Example, Comparative Example, or Reference Example, using a different die size. The sintered body was measured for biaxial flexural strength at a crosshead speed of 0.5 mm/min in compliance with JIS T 6526:2012, using an autograph (a universal precision testing machine manufactured by Shimadzu Corporation under the trade name AG-I 100kN) (n = 5). The average values of the measurements are presented in Table 3.

<Evaluation of Translucency of Sintered Body>

The sintered body obtained in each Example or Comparative Example was ground into a 1.20 mm-thick plate sample. The sample was then measured for lightness (Lw*) by measuring chromaticity against a white background using a spectrophotometer (Crystaleye manufactured by Olympus Corporation under this trade name) in a measurement mode based on a 7-band spectral estimation method with a 7-band LED light source. The same specimen was also measured for lightness ($L_B$*) by measuring chromaticity against a black background using the same measurement device in the same measurement mode with the same light source. The difference between these values ($\Delta L$* = (Lw*) - ($L_B$*)) was then determined as the translucency ($\Delta L$*(W-B)) (n = 3). The average values of the measurements are presented in Table 3.

<Measurement Method of Fracture Toughness Value>

The sintered body obtained in each Example, Comparative Example, or Reference Example was measured for fracture toughness value in compliance with JIS R 1607:2015, using a micro/macro Vickers hardness tester (FALCON 509FA manufactured by Innovatest·Japan under this trade name) (n = 3). The average values of the measurements are presented in Table 3.

<Qualification Criteria for Different Properties Based on Yttria Content>

The sample was deemed satisfactory when it met all of the following criteria.

[Table 2]

| Yttria content | Biaxial flexural strength (MPa) | Translucency | Fracture toughness value (MPa·m$^{1/2}$) |
|---|---|---|---|
| 3.0 mol% or more and less than 4.5 mol% | 1200 or more | 12.0 or more | 4.6 or more |
| 4.5 mol% or more and less than 5.8 mol% | 750 or more | 14.0 or more | 3.0 or more |

(continued)

| Yttria content | Biaxial flexural strength (MPa) | Translucency | Fracture toughness value (MPa·m$^{1/2}$) |
|---|---|---|---|
| 5.8 mol% or more and 7.5 mol% or less | 550 or more | 16.0 or more | 2.0 or more |
| (Yttria content represents the content relative to the total mole of zirconia and yttria.) | | | |

[Table 3]

| Example/ Comparative Example | Mixing ratio of raw material 1 (mass%) | Mixing ratio of raw material 2 (mass%) | Mixing ratio of raw material 3 (mass%) | Zirconia pre-sintered body | | Zirconia sintered body | | | | |
|---|---|---|---|---|---|---|---|---|---|---|
| | | | | Fraction of undissolved yttria (%)[1] | Firing condition[2] | A15/A50 | Yttria content[3] (mol%) | Biaxial flexural strength (MPa) | $\Delta$L*(W-B) | Fracture toughness value (MPa·m$^{1/2}$) |
| Ex. 1 | 45.18 | 45.18 | 9.64 | 12.7 | 1 | 0.40 | 5.5 | 793 | 14.9 | 4.3 |
| Ex. 2 | 45.18 | 45.18 | 9.64 | 12.7 | 2 | 0.46 | 5.5 | 798 | 14.9 | 4.4 |
| Ex. 3 | 45.18 | 45.18 | 9.64 | 12.7 | 3 | 0.48 | 5.5 | 752 | 14.8 | 3.8 |
| Ex. 4 | 45.18 | 45.18 | 9.64 | 12.7 | 4 | 0.51 | 5.5 | 787 | 14.9 | 3.5 |
| Ex. 5 | 18.07 | 72.29 | 9.64 | 12.3 | 1 | 0.32 | 5.5 | 781 | 14.2 | 3.3 |
| Ex. 6 | 18.07 | 72.29 | 9.64 | 12.3 | 4 | 0.41 | 5.5 | 770 | 14.7 | 3.3 |
| Ex. 7 | 90.36 | 0 | 9.64 | 13.3 | 1 | 0.55 | 5.5 | 752 | 14.7 | 3.3 |
| Ex. 8 | 90.36 | 0 | 9.64 | 13.3 | 2 | 0.57 | 5.5 | 759 | 14.8 | 3.5 |
| Ex. 9 | 90.36 | 0 | 9.64 | 13.3 | 3 | 0.58 | 5.5 | 757 | 14.5 | 3.4 |
| Ex. 10 | 92.91 | 0 | 709 | 9.8 | 1 | 0.52 | 4.0 | 1244 | 12.5 | 4.7 |
| Ex. 11 | 46.455 | 46.455 | 709 | 9.5 | 1 | 0.49 | 4.0 | 1251 | 12.7 | 4.6 |
| Com. Ex. 1 | 90.36 | 0 | 9.64 | 13.3 | 4 | 0.61 | 5.5 | 568 | 15.7 | 3.0 |
| Com. Ex. 2 | 93.25 | 0 | 6.75 | 9.4 | 4 | 0.62 | 3.8 | 1239 | 11.4 | 4.3 |
| Reference Example | Unknown | Unknown | Unknown | Unknown | 4 | 0.64 | 4.0 | 1231 | Unknown | 4.3 |

1) The fraction of undissolved yttria (%) represents the result of calculation using the formula $f_y = I_{29}/(I_{28}+I_{29}+I_{30}) \times 100$ presented in the specification.

2) Firing condition means any of the firing conditions presented in Table 1.

3) Yttria content represents the content relative to the total mole of zirconia and yttria.

(In Reference Example, the entry "Unknown" indicates that the raw material powder is not separated into a zirconia powder and a yttria powder, and does not use raw materials 1 to 3.)

As indicated in Table 3, the zirconia sintered body of Reference Example with A15/A50 = 0.64 (Example 1 of Patent Literature 1) showed a lower presence of extremely small particles and a more presence of larger particles compared to the zirconia sintered body with A15/A50 = 0.52 (Example 10), despite having the same yttria content. Consequently, the properties of the zirconia sintered body were inferior to those of the present invention.

It was confirmed from Examples 1 to 11 that zirconia sintered bodies of the present invention exhibit superior flexural strength, fracture toughness, and translucency, according to the yttria content.

INDUSTRIAL APPLICABILITY

A zirconia sintered body of the present invention can be suitably used for dental product applications. Examples of the dental products include copings, frameworks, crowns, crown bridges, abutments, implants, implant screws, implant fixtures, implant bridges, implant burs, brackets, denture bases, inlays, onlays, orthodontic wires, and laminate veneers.

**Claims**

1. A zirconia sintered body comprising zirconia particles, and satisfying A15/A50 < 0.60, wherein A15 represents the particle diameter of when the cumulative area of zirconia particles reaches 15% of the total area, and A50 represents the particle diameter of when the cumulative area of zirconia particles reaches 50% of the total area in a SEM photograph of the zirconia sintered body when the area of each zirconia particle is calculated and the calculated areas are accumulated in sequence from particles with smaller areas, where the total area represents the sum of the areas of the zirconia particles in the SEM photograph.

2. The zirconia sintered body according to claim 1, which satisfies 0.20 < A15/A50 < 0.60.

3. The zirconia sintered body according to claim 1 or 2, which further comprises a stabilizer capable of preventing a phase transformation of zirconia.

4. The zirconia sintered body according to claim 3, wherein the stabilizer is yttria.

5. The zirconia sintered body according to claim 4, wherein the content of the yttria is 3.0 to 7.5 mol% relative to the total mole of the zirconia and the yttria.

6. A method for producing a zirconia sintered body of any one of claims 1 to 5, comprising the steps of:

   molding a raw material powder containing a zirconia raw material to obtain a zirconia molded body; and
   firing the zirconia molded body or a zirconia pre-sintered body resulting from pre-sintering of the zirconia molded body to obtain a zirconia sintered body,
   the zirconia raw material being a zirconia raw material with at least two average particle diameters.

7. The method for producing a zirconia sintered body according to claim 6, wherein the zirconia raw material is a zirconia raw material with two average particle diameters.

8. The method for producing a zirconia sintered body according to claim 6 or 7, wherein P1 and P2 satisfy the following formulae:

$$50 \text{ nm} \leq P1 < 500 \text{ nm}$$

$$5 \text{ nm} < P2 < 50 \text{ nm},$$

where P1 and P2 represent the two average particle diameters.

9. A method for producing a zirconia sintered body of any one of claims 1 to 5, comprising the steps of:

   molding a raw material powder containing a zirconia raw material to obtain a zirconia molded body; and
   firing the zirconia molded body or a zirconia pre-sintered body resulting from pre-sintering of the zirconia molded body to obtain a zirconia sintered body,
the zirconia raw material being a zirconia raw material with a single average particle diameter.

10. The method for producing a zirconia sintered body according to claim 9, wherein the zirconia raw material is a zirconia powder having an average particle diameter of 50 nm or more and 500 nm or less.

11. The method for producing a zirconia sintered body according to claim 10, wherein the average particle diameter is 60 nm or more and 400 nm or less.

12. The method for producing a zirconia sintered body according to any one of claims 6 to 11, wherein the raw material powder comprises a raw material of a stabilizer capable of preventing a phase transformation of zirconia.

13. The method for producing a zirconia sintered body according to claim 12, wherein the stabilizer is yttria.

14. The method for producing a zirconia sintered body according to claim 12 or 13, wherein at least a part of the stabilizer is not dissolved in zirconia as a solid solution.

15. The method for producing a zirconia sintered body according to claim 14, wherein the fraction $f_y$ of the stabilizer not dissolved in zirconia as a solid solution in the raw material powder is 1% or more as calculated from the following formula,

$$f_y = I_{29}/(I_{28}+I_{29}+I_{30}) \times 100,$$

where $f^y$ represents the fraction (%) of yttria not dissolved in zirconia as a solid solution, $I_{28}$ represents the area intensity of a peak near $2\theta = 28°$, where the main peak of the monoclinic crystal system appears in XRD measurement, $I_{29}$ represents the area intensity of a peak near $2\theta = 29°$, where the main peak of yttria appears in XRD measurement, and $I_{30}$ represents the area intensity of a peak near $2\theta = 30°$, where the main peak of the tetragonal or cubic crystal system appears in XRD measurement.

16. The method for producing a zirconia sintered body according to any one of claims 6 to 15, wherein the fraction $f_m$ of the monoclinic crystal system in the zirconia raw material is 55% or more as calculated from the following formula,

$$f_m = I_{28}/(I_{28}+I_{30}) \times 100,$$

where $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

17. The method for producing a zirconia sintered body according to any one of claims 6 to 16, wherein the duration from the start of temperature increase to the completion of the retention at a highest firing temperature is 90 minutes or less in said firing.

2.0 μm

FIG.1

2.0 $\mu$ m

FIG.2

2.0 $\mu$ m

FIG.3

<table>
<tr><td colspan="2" align="center">**INTERNATIONAL SEARCH REPORT**</td><td>International application No.<br><br>**PCT/JP2022/047900**</td></tr>
</table>

**A. CLASSIFICATION OF SUBJECT MATTER**

*C01G 25/02*(2006.01)i; *A61C 13/083*(2006.01)i; *C04B 35/486*(2006.01)i
FI: C04B35/486; C01G25/02; A61C13/083

According to International Patent Classification (IPC) or to both national classification and IPC

**B. FIELDS SEARCHED**

Minimum documentation searched (classification system followed by classification symbols)

C01G25/02; A61C13/083; C04B35/00-C04B35/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2014/142080 A1 (KURARAY NORITAKE DENTAL INC.) 18 September 2014 (2014-09-18) | 1-8, 15-16 |
| | claims, paragraphs [0062]-[0074] | |
| Y | | 15, 17 |
| X | WO 2018/056330 A1 (KURARAY NORITAKE DENTAL INC.) 29 March 2018 (2018-03-29) | 1-5, 9-17 |
| | claims, paragraphs [0156]-[0205] | |
| Y | | 15, 17 |
| A | JP 2019-85284 A (DENSO CORP.) 06 June 2019 (2019-06-06) | 1-17 |
| A | JP 2014-535155 A (SAINT-GOBAIN CERAMICS & PLASTICS, INC.) 25 December 2014 (2014-12-25) | 1-17 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/047900** |

**C.** **DOCUMENTS CONSIDERED TO BE RELEVANT**

| Category* | Citation of document, with indication, where appropriate, of the relevant passages | Relevant to claim No. |
| --- | --- | --- |
| A | JP 2012-509827 A (EXXONMOBIL CHEMICAL PATENTS INC.) 26 April 2012 (2012-04-26) | 1-17 |
| A | JP 2017-128471 A (TOSOH CORP.) 27 July 2017 (2017-07-27) | 1-17 |

Form PCT/ISA/210 (second sheet) (January 2015)

INTERNATIONAL SEARCH REPORT
Information on patent family members

International application No.

**PCT/JP2022/047900**

| Patent document cited in search report | | | Publication date (day/month/year) | Patent family member(s) | | | Publication date (day/month/year) |
|---|---|---|---|---|---|---|---|
| WO | 2014/142080 | A1 | 18 September 2014 | US<br>claims, paragraphs [0075]-<br>[0083]<br>CN | 2016/0016853<br><br>105026337 | A1<br><br>A | |
| WO | 2018/056330 | A1 | 29 March 2018 | US<br>claims, paragraphs [0162]-<br>[0203]<br>CN | 2020/0317581<br><br>109689593 | A1<br><br>A | |
| JP | 2019-85284 | A | 06 June 2019 | US<br><br>CN | 2020/0256824<br><br>111315708 | A1<br><br>A | |
| JP | 2014-535155 | A | 25 December 2014 | US<br><br>KR | 2013/0137014<br><br>10-2014-0088899 | A1<br><br>A | |
| JP | 2012-509827 | A | 26 April 2012 | US<br><br>CN | 2010/0126907<br><br>102224120 | A1<br><br>A | |
| JP | 2017-128471 | A | 27 July 2017 | (Family: none) | | | |

Form PCT/ISA/210 (patent family annex) (January 2015)

**EP 4 458 772 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014142080 A
- JP 2008222450 A